# FASCICULE DE BREVET EUROPEEN

(11) **EP 1 998 175 B1**
(45) Date de publication et mention de la délivrance du brevet: **07.12.2011**
(21) Numéro de dépôt: 08156284.5
(22) Date de dépôt: 15.05.2008
(51) Int. Cl.: G01N 29/07, G01N 29/28, G01N 29/30

(54) **Prévision par ultrasons de la déformation d'une pièce**
Ultraschallvorhersage über die Deformation eines Werkstücks
Ultrasound forecast of the deformation of a part

(30) Priorité: 29.05.2007 FR 0703772
(43) Date de publication de la demande: 03.12.2008
(73) Titulaire: Snecma, 75015 Paris (FR)
(72) Inventeur: Chatellier, Jean-Yves, François, Roger, 94110, ARCUEIL (FR); Le Letty, Eric, Charles, Louis, 91700, SAINTE GENEVIEVE DES BOIS (FR)
(74) Mandataire: Ramey, Daniel

(56) Documents cités:
- WO-A-96/36874
- DE-A1- 19 712 650
- FR-A- 1 416 636
- GB-A- 2 383 413
- US-A- 5 386 727

## Description

La présente invention concerne un procédé de prévision de la déformation d'une pièce qui doit être soumise à un usinage et en particulier, elle concerne une application de ce procédé à un disque de compresseur haute-pression dans une turbomachine.

La réalisation de pièces telles que des disques de compresseur nécessite habituellement plusieurs opérations d'usinage. Or, durant l'usinage, une déformation de la pièce peut intervenir du fait de la libération des contraintes résiduelles présentes dans la pièce. Au delà d'une certaine valeur de déformation, les tolérances en terme d'épaisseur, de planéité et de parallélisme par exemple ne sont plus respectées et conduisent ainsi à la mise au rebut de la pièce usinée, ce qui engendre d'importantes pertes financières.

Afin de réduire l'impact des contraintes résiduelles lors de l'usinage, il est possible de réaliser un nombre d'opérations d'usinage plus important ce qui permet de limiter la déformation. Cependant, l'augmentation du nombre d'opérations d'usinage implique un coût supplémentaire important du fait du temps relativement long requis par chaque opération d'usinage. L'expérience acquise lors de l'usinage ne permet pas de déduire la procédure la plus adaptée car le niveau de déformation présente une forte variabilité entre les pièces d'un même type.

Le document US 5,386,727 décrit plusieurs procédés de mesure par ultrasons des contraintes longitudinales dans un rail de chemin de fer au moyen d'ondes de cisaillement se propageant à l'intérieur du rail. Le dispositif comprend un transducteur émetteur et un groupe de transducteurs récepteurs positionnés sur le rail de manière à ce que l'intensité du signal reçu soit maximale. Une mesure de la variation de l'angle d'incidence ou de la distance séparant le transducteur émetteur et le groupe de récepteurs entre une partie du rail sans contrainte et une partie du rail comprenant des contraintes, permet d'évaluer le niveau de contraintes dans le rail.

Le document FR 1416636, décrit un élément de transmission d'ondes élastiques comportant un polymère élastique placé à l'extrémité d'un transducteur émetteur, l'ensemble étant positionné sur une pièce d'usinage pour effectuer une opération de contrôle non destructif. Le polymère a une faible vitesse de propagation des ondes longitudinales, ce qui permet la formation d'ondes de rotation et d'ondes de surface sous des angles d'incidence petits.

Le document WO 96/36874 décrit un procédé d'analyse d'une pièce consistant à émettre un faisceau d'ondes ultrasonores sur une surface de la pièce, le faisceau étant orienté de telle manière qu'une onde longitudinale se propage dans une direction donnée sous la surface de la pièce et sensiblement parallèlement à la surface, à placer un transducteur en mode de réception sur la surface de la pièce pour recevoir l'onde longitudinale sub-surfacique qui s'est propagé, et à suivre la propagation de l'onde longitudinale en fonction du temps.

L'invention a notamment pour objet un procédé pour estimer la déformation d'une pièce avant son usinage, ce procédé étant simple à mettre en oeuvre, efficace et économique.

Elle propose à cet effet, un procédé de prévision de la déformation d'une pièce qui doit être soumise à un usinage susceptible de provoquer une déformation de la pièce par libération de contraintes résiduelles de la pièce, caractérisé en ce qu'il consiste à :
a. émettre un faisceau d'ondes ultrasonores sur une surface de la pièce, le faisceau étant orienté de telle manière qu'une onde longitudinale se propage dans une direction donnée sous la surface de la pièce et sensiblement parallèlement à la surface,
b. placer au moins un transducteur en mode de réception sur la surface de la pièce pour recevoir l'onde longitudinale subsurfacique qui s'est propagée,
c. mesurer la vitesse de propagation de l'onde longitudinale subsurfacique,
d. les étapes a à c étant effectuées dans deux zones différentes de la pièce, la première zone étant sensible aux contraintes résiduelles et la deuxième zone étant peu sensible aux contraintes résiduelles, puis calculer la différence entre la vitesse mesurée dans la première zone et la vitesse mesurée dans la deuxième zone, et déduire de cette différence la déformation qui résultera de l'usinage de la première zone de la pièce.

L'utilisation d'une onde longitudinale se propageant sous la surface de la pièce permet de sonder la partie de la pièce qui va subir l'usinage. La vitesse de l'onde longitudinale subsurfacique qui est sensible aux contraintes résiduelles renseigne sur le niveau de contrainte dans la zone sensible aux contraintes résiduelles par comparaison avec une vitesse de référence mesurée dans une zone de la pièce non sensible aux contraintes résiduelles. L'invention permet de déduire la déformation de la pièce, à partir de la différence de vitesse de propagation. On peut ainsi anticiper la déformation de la pièce qui résultera de son usinage.

Selon une autre caractéristique de l'invention, ce procédé consiste au préalable à réaliser une courbe de calibration de la déformation en fonction de la différence de vitesse de propagation de l'onde longitudinale subsurfacique, en exécutant sur une pluralité de pièces similaires les étapes a à d, puis en réalisant l'usinage et en mesurant la déformation réelle des pièces, et à utiliser cette courbe de calibration pour prévoir la déformation d'une pièce non usinée à partir de la différence de vitesse de l'étape d calculée sur cette pièce.

D'après les équations de propagation, la différence de vitesse varie avec la contrainte. Le procédé selon l'invention propose de relier directement cette différence de vitesse à la déformation obtenue après usinage sans faire le calcul long et compliqué du champ de contrainte. La courbe de calibration de la déformation en fonction de la différence de vitesse entre les zones sensible et non sensible aux contraintes, permet ainsi par une simple et rapide mesure de différence de vitesse de prédire quelle sera la déformation de la pièce, ce qui représente un véritable avantage par rapport à la technique antérieure.

Dans un mode de réalisation préféré de l'invention, le procédé utilise deux transducteurs en réception ayant des axes ultrasonores parallèles et séparés d'une distance connue.

En utilisant deux transducteurs en réception, la mesure de vitesse de l'onde longitudinale subsurfacique peut ainsi être réalisée en mesurant la différence de temps de vol entre les échos reçus sur chacun des deux transducteurs. Une telle mesure est plus simple à mettre en place qu'une mesure de temps de vol entre un transducteur émetteur et un transducteur récepteur qui nécessite de connaître parfaitement l'instant où le transducteur émetteur émet une onde.

Avantageusement, le procédé consiste également à intercaler une pièce de couplage entre chaque transducteur et la pièce non usinée.

L'interposition d'une pièce de couplage entre la surface de la pièce et les transducteurs permet d'assurer un bon positionnement angulaire du transducteur par rapport à la pièce. Elle permet également de s'affranchir de la nécessité d'immerger la pièce et les transducteurs dans une cuve liquide pour générer une onde longitudinale subsurfacique. De plus, l'immersion de pièces telles que des disques de turbomachine n'est pas toujours réalisable étant donné les dimensions parfois importantes de celles-ci.

Selon une autre caractéristique du procédé, la pièce de couplage comprend au moins un plan incliné formant un angle θ par rapport à la surface de la pièce lorsque la pièce de couplage est intercalée entre le transducteur et la pièce.

Les pièces de couplage d'émission et de réception sont positionnées sur la surface de la pièce de manière à ce que leurs plans inclinés soient orientés dans les sens anti-horaire et horaire par rapport à la surface de la pièce, respectivement, les transducteurs étant positionnés de manière à ce que leurs axes ultrasonores soient perpendiculaires aux plans inclinés de leurs pièces de couplage.

Un tel positionnement des transducteurs sur leurs pièces de couplage permet que leurs axes ultrasonores forment un angle θ avec la surface de la pièce. L'angle d'incidence θ du faisceau ultrasonore sur la pièce détermine la propagation ou non d'une onde longitudinale subsurfacique. Cet angle qui est fonction des vitesses de propagation des ondes longitudinales dans la pièce de couplage et dans la pièce étudiée, peut être déterminé expérimentalement.

La pièce de couplage peut être en une matière plastique telle que du polyméthacrylate de méthyle (PMMA) et avoir une forme sensiblement triangulaire. Pour du PMMA, l'angle θ permettant de générer une onde subsurfacique est compris entre 30°et 32° environ.

Le procédé peut être utilisé avec des transducteurs émetteur et récepteurs ayant une fréquence centrale comprise entre 1 et 15 MHz. Le choix de la fréquence détermine l'épaisseur dans la pièce de la zone de propagation de l'onde longitudinale subsurfacique. Si l'on souhaite analyser le niveau de contrainte de la pièce sur une épaisseur importante, alors on choisira une petite fréquence et inversement si l'on souhaite analyser une plus faible épaisseur.

Afin de mesurer la déformation de la pièce, des capteurs peuvent être positionnés sur la pièce.

Le procédé selon l'invention peut être appliqué à un disque de compresseur de turbomachine et les mesures ultrasonores de vitesse sont réalisées avec les transducteurs émetteur et récepteurs radialement alignés sur la surface du disque à usiner. Le positionnement des transducteurs sur une ligne radiale se justifie par le fait que la différence de vitesse calculée dans cette direction se corrèle bien avec la déformation de la pièce.

Le procédé consiste enfin à déterminer un nombre d'opérations d'usinage à partir de la valeur de déformation déduite de la différence de vitesse calculée à l'étape d.

En fonction de la valeur de déformation prédite par le procédé, on peut décider de réaliser un faible nombre d'opérations d'usinage si la valeur prédite est faible, ou dans le cas d'une valeur de déformation prédite plus importante, on peut choisir d'augmenter le nombre d'opérations d'usinage afin de libérer plus progressivement les contraintes résiduelles. On peut aussi décider de faire subir à la pièce un traitement supplémentaire de relâchement des contraintes si cela permet de ne pas la mettre au rebut. Enfin on peut décider de ne pas usiner la pièce si la valeur de déformation prédite est trop importante.

Cette méthodologie permet de choisir au mieux le nombre d'étapes nécessaires à l'usinage d'une pièce et conduit à des gains de temps et économique importants.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en perspective d'un dispositif de mesure de la vitesse d'une onde longitudinale se propageant sous la surface d'une pièce ;
- la figure 2 représente deux échos reçus par les deux récepteurs dans le mode de réalisation préféré de l'invention ;
- la figure 3 est une vue schématique selon un plan de coupe radial d'un demi disque de turbomachine avant usinage ;
- la figure 4 représente un graphe de calibration de la déformation en fonction de la différence des vitesses mesurées dans des zones sensible et peu sensible respectivement aux contraintes résiduelles d'un disque de turbomachine.

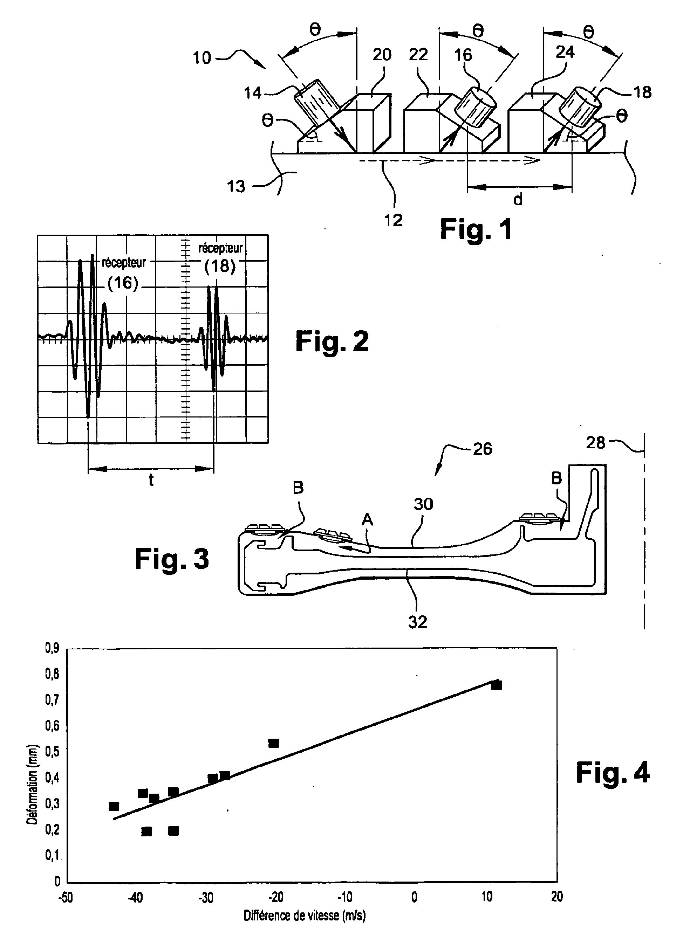

On se réfère tout d'abord à la figure 1 qui représente un dispositif 10 de mesure de la vitesse d'une onde longitudinale subsurfacique ultrasonore 12 (représentée par les flèches en pointillés) se propageant dans une pièce 13. Le dispositif comprend un transducteur émetteur 14 et deux transducteurs récepteurs 16, 18 positionnés sur des pièces de couplage 20, 22, 24 de manière à ce que leurs axes ultrasonores soient perpendiculaires à un plan incliné de leurs pièces de couplage. Les transducteurs récepteurs sont séparés d'une distance d connue. Le plan incliné de la pièce de couplage 20 du transducteur émetteur 14 fait un angle θ avec la surface de la pièce et ce plan est orienté dans le sens anti-horaire. Les plans inclinés des pièces de couplage 22, 24 des transducteurs récepteurs 22, 24 font un angle identique θ avec la surface de la pièce et sont orientés dans le sens horaire. De cette manière, l'axe ultrasonore de chacun des transducteurs forme également un angle θ avec la surface de la pièce. Un gel couplant est intercalé entre la face piézoélectrique de chacun des transducteurs et le plan incliné ainsi qu'entre les surfaces de la pièce de couplage et de la pièce 13, ce qui permet d'assurer un couplage maximal entre le transducteur, la pièce de couplage et la pièce 13 et évite ainsi les artéfacts qui pourraient être induits par la présence de bulles d'air sur le chemin de propagation de l'onde.

Les transducteurs sont reliés à des moyens non représentés de commande, tels qu'un micro-ordinateur.

Lorsque le transducteur émetteur 14 est excité par un générateur (non représenté), l'onde ultrasonore émise se propage selon l'axe ultrasonore du transducteur dans la pièce de couplage 20 jusqu'à l'interface entre la pièce de couplage 20 et la surface de la pièce 13 et subit une réfraction à l'intérieur de la pièce 13. Une onde longitudinale est ensuite réfractée sous la surface et s'y propage sensiblement parallèlement. L'onde longitudinale subsurfacique rayonne avec un angle θ identique à l'angle d'incidence vers chacun des transducteurs récepteurs 16, 18 à travers les pièces de couplage 22, 24 et les échos reçus sont enregistrés (figure 2).

La vitesse de propagation de l'onde ultrasonore est mesurée en divisant la distance d séparant les deux transducteurs récepteurs 16, 18 par la différence de temps t mesurée entre l'écho reçu par le deuxième récepteur 18 et l'écho reçu par le premier récepteur 16.

Lors de l'usinage d'une pièce 13, les contraintes résiduelles présentes dans la pièce peuvent être libérées et générer de ce fait une déformation importante de la pièce laquelle peut ne plus respecter les critères ou tolérances requises à son utilisation et doit alors être mise au rebut.

II est donc important de connaître avant usinage le niveau de contraintes présent dans le matériau afin d'adapter au mieux l'opération d'usinage pour libérer progressivement les contraintes résiduelles et limiter les déformations. Le niveau de ces contraintes dans une pièce est directement proportionnel à la différence des vitesses de propagation de l'onde subsurfacique ultrasonore dans une zone sensible aux contraintes et dans une zone peu sensible aux contraintes. Ainsi, au lieu d'effectuer un calcul long et compliqué du champ de contraintes pour établir une correspondance avec la différence de vitesse, l'invention propose d'utiliser la différence de vitesse de propagation des ondes longitudinales subsurfaciques pour estimer directement la déformation que la pièce 13 va subir lors de l'usinage.

La pièce 13 dont on souhaite évaluer la déformation est ici un disque 26 de compresseur haute-pression d'axe de symétrie 28 (figure 3). Le trait continu de contour extérieur 30 représente la surface du disque 26 à l'état non usiné et le trait continu 32 situé à l'intérieur du trait de contour extérieur 30 représente la forme finale du disque obtenue après usinage.

Une mesure de vitesse de propagation est réalisée selon la méthode décrite ci-dessus dans une zone A située entre les parties d'extrémité radialement interne et externe du disque, dont on sait qu'elle est sensible aux contraintes. Une mesure similaire est réalisée dans deux zones B peu sensibles aux contraintes, situées par exemple aux extrémités radialement interne et externe du disque qui sont des zones où l'épaisseur de matière est importante. On a pu vérifier par la méthode du trou incrémental qui consiste à réaliser un trou dans une pièce par incrément et à déterminer les contraintes résiduelles présentes en profondeur, que les contraintes sont très faibles dans les zones épaisses. Dans chacune des zones A et B, les transducteurs émetteurs et récepteurs sont alignés radialement sur la surface du disque. Enfin, on calcule la différence entre la vitesse mesurée dans la zone A et la moyenne des vitesses mesurées dans les zones B.

Le disque est ensuite usiné et sa déformation après usinage et débridage est mesurée à l'aide de capteurs non représentés disposés sur l'ensemble du disque.

On dispose ainsi d'une valeur de différence de vitesse de propagation de l'onde longitudinale subsurfacique à laquelle correspond une déformation réelle due à l'usinage du disque 26. En répétant plusieurs fois les opérations précédentes sur une pluralité de disques 26 du même type, on obtient plusieurs couples de points [différence de vitesse, déformation] qui permettent de tracer le graphe de calibration de la figure 4 représentant la déformation en fonction de la variation de différence de vitesse.

La régression linéaire de la déformation en fonction de la différence de vitesse montre une corrélation à près de 84 % des deux variables, ce qui est très satisfaisant.

Afin de prédire la déformation par usinage d'un disque 26 du même type, il suffit de faire une mesure de différence de vitesse et de lire sur la courbe de calibration la déformation correspondante. De cette manière, il est possible de prévoir la déformation que le disque va subir pendant l'usinage, avec une précision de 0,1 mm.

Il est alors possible d'adapter le nombre d'opérations d'usinage à la valeur de déformation prédite. Par exemple, si le modèle prévoit une déformation inférieure à 0,5 mm, on peut effectuer seulement deux opérations d'usinages. Dans le cas où la déformation prédite est comprise entre 0,5 et 1 mm, on pourra augmenter le nombre d'opérations d'usinage et en réaliser quatre, afin de libérer plus progressivement les contraintes. Dans le cas où la déformation prédite est supérieure à 1 mm, on peut décider de faire subir au disque 26 une opération supplémentaire de relâchement des contraintes ou bien décider de ne réaliser aucune opération d'usinage et de mettre le disque au rebut

La mise en place d'une telle stratégie pour l'usinage permet ainsi de limiter le coût et le nombre de pièces mises au rebut.

La courbe de calibration obtenue par le procédé est fonction des paramètres d'usinage (volume de matière enlevé à chaque opération d'usinage, nombre d'opérations de retournement de la pièce, ...) puisque ces paramètres influent directement sur la libération des contraintes. Ainsi l'échelle de déformation obtenue ne peut être utilisée que pour certains paramètres d'usinage et pour une pièce donnée, ce qui nécessite donc de refaire la démarche expérimentale décrite ci-dessus pour obtenir une courbe de calibration pour un autre type de pièce et/ou pour des paramètres d'usinage différents.

Dans le mode de réalisation représenté aux dessins, les transducteurs récepteurs 16, 18 sont séparés d'une distance de 17,124 mm et les pièces de couplage 20, 22, 24 sont en polyméthacrylate de méthyle et de forme trapézoïdale. L'angle d'incidence θ permettant de générer une onde longitudinale subsurfacique dans le disque 26 est alors compris entre 30° et 32°. En pratique, les mesures de la vitesse de l'onde longitudinale dans le disque ont été réalisées à un angle de 31,8°.

Les pièces de couplages peuvent être réalisées en toute matière autre que du polyméthacrylate de méthyle à la condition d'adapter la valeur de l'angle θ en fonction de la vitesse de propagation des ultrasons dans la pièce de couplage pour qu'une onde longitudinale subsurfacique puisse être réfractée dans la pièce 13.

L'utilisation d'une pièce de couplage n'est pas une condition nécessaire à la mise en oeuvre du procédé et on peut réaliser les mesures de vitesse en immergeant les transducteurs et la pièce dans un liquide, la valeur de l'angle d'incidence θ étant alors comprise entre 15° et 20° pour un disque du type précité.

Les transducteurs ultrasonores retenus ont une fréquence centrale de 2,25 MHz afin que l'onde longitudinale subsurfacique se propage sous la surface sur une épaisseur d'environ 6 mm. La fréquence des transducteurs peut être comprise entre 1 et 15 MHz selon que l'on souhaite sonder une profondeur plus ou moins importante de la pièce. Pour cette gamme de fréquences, l'épaisseur sondée est d'environ 12 mm à 1 MHz et d'environ 0,3 mm à 15 MHz.

## Revendications

1. Procédé de prévision de la déformation d'une pièce qui va être soumise à un usinage, susceptible de provoquer une déformation de la pièce (13) par libération de contraintes résiduelles de la pièce (13), consistant à :
a. émettre un faisceau d'ondes ultrasonores sur une surface de la pièce, le faisceau étant orienté de telle manière qu'une onde longitudinale (12) se propage dans une direction donnée sous la surface de la pièce (13) et sensiblement parallèlement à la surface,
b. placer au moins un transducteur en mode de réception (16, 18) sur la surface de la pièce pour recevoir l'onde longitudinale subsurfacique (12) qui s'est propagée, **caractérisé en ce qu'**il consiste à :
c. mesurer la vitesse de propagation de l'onde longitudinale subsurfacique (12),
d. les étapes a à c étant effectuées dans deux zones différentes de la pièce, la première zone (A) étant sensible aux contraintes résiduelles et la deuxième zone (B) étant peu sensible aux contraintes résiduelles, puis calculer la différence entre la vitesse mesurée dans la première zone et la vitesse mesurée dans la deuxième zone, et déduire de cette différence la déformation qui résultera de l'usinage de la première zone (A) de la pièce (13).

2. Procédé selon la revendication 1, **caractérisé en ce qu'**il consiste au préalable à réaliser une courbe de calibration de la déformation en fonction de la différence de vitesse de propagation de l'onde longitudinale subsurfacique, en exécutant sur une pluralité de pièces similaires les étapes a à d, puis en réalisant l'usinage et en mesurant la déformation des pièces, et à utiliser cette courbe de calibration pour prévoir la déformation d'une pièce (13) non usinée à partir de la différence de vitesse de l'étape d calculée sur cette pièce (13).

3. Procédé selon la revendication 1 ou 2, **caractérisé en ce que** qu'on utilise deux transducteurs en réception (16, 18) ayant des axes ultrasonores parallèles et séparés d'une distance connue.

4. Procédé selon l'une des revendications 1 à 3, **caractérisé en ce qu'**on intercale une pièce de couplage entre chaque transducteur (14, 16, 18) et la pièce (13) non usinée.

5. Procédé selon la revendication 4, **caractérisé en ce que** la pièce de couplage comprend au moins un plan inclinée formant un angle θ par rapport à la surface de la pièce (13) lorsque la pièce de couplage (20, 22, 24) est intercalée entre le transducteur (14, 16, 18) et la pièce (13).

6. Procédé selon la revendication 5, **caractérisé en ce qu'**on positionne les pièces de couplage d'émission (20) et de réception (22, 24) sur la surface de la pièce (13) de manière à ce que leurs plans inclinés soient orientés dans les sens anti-horaire et horaire par rapport à la surface de la pièce (13), respectivement, les transducteurs (14, 16, 18) étant positionnés de manière à ce que leurs axes ultrasonores soient perpendiculaires aux plans inclinés de leurs pièces de couplage.

7. Procédé selon l'une des revendications 4 à 6, **caractérisé en ce que** la pièce de couplage est en polyméthacrylate de méthyle et est de forme sensiblement triangulaire.

8. Procédé selon la revendication 7, **caractérisé en ce que** l'angle θ est compris entre 30° et 32° environ.

9. Procédé selon l'une des revendications précédentes, **caractérisé en ce que** les transducteurs (14, 16, 18) ont une fréquence centrale comprise entre 1 et 15 MHz.

10. Procédé selon l'une des revendications précédentes, **caractérisé en ce que** la déformation de la pièce (13) est mesurée à l'aide de plusieurs capteurs positionnés sur la pièce (13).

11. Procédé selon l'une des revendications précédentes, **caractérisé en ce qu'**il est appliqué à un disque de compresseur (26) de turbomachine et **en ce que** les mesures ultrasonores de vitesse sont réalisées avec les transducteurs émetteur (14) et récepteurs (16, 18) radialement alignés sur la surface du disque à usiner.

12. Procédé selon l'une des revendications précédentes, **caractérisé en ce que** le nombre d'opérations d'usinage est déterminé à partir de la valeur de déformation déduite de la différence de vitesse calculée à l'étape d.

## Claims

1. A method of predicting the deformation of a workpiece (13) that will be subjected to machining, liable to cause deformation of the workpiece (13) through the release of residual stresses in the workpiece (13), which method consists in:
a. emitting a beam of ultrasound waves onto a surface of the workpiece (13), the beam being directed in such a way that a longitudinal wave (12) is propagated in a given direction under the surface of the workpiece (13) and substantially parallel to the surface,
b. positioning at least one transducer in receive mode (16/18) on the surface of the workpiece (13) to receive the subsurface longitudinal wave (12) that has been propagated, **characterized in that** it consists in,
c. measuring the propagation velocity of the subsurface longitudinal wave (12),
d. steps a to c being performed in two different regions of the workpiece (13), the first region (A) being sensitive to residual stresses and the second region (B) being somewhat insensitive to residual stresses, then calculating the difference between the velocity measured in the first region (A) and the velocity measured in the second region and from this difference deducing the deformation that will result from machining the first region (A) of the workpiece (13).

2. The method as claimed in claim 1, **characterized in that** it consists beforehand in producing a calibration curve of deformation as a function of the difference in velocity of propagation of the subsurface longitudinal wave by carrying out steps a to d on a plurality of similar workpieces then performing the machining operation and measuring the deformation of the workpieces and in using this calibration curve to predict the deformation of an unmachined workpiece (13) from the difference in velocity in step d calculated for this workpiece (13).

3. The method as claimed in claim 1 or 2, **characterized in that** use is made of two transducers (16, 18) in receive mode having parallel ultrasound axes and which are separated by a known distance.

4. The method as claimed in one of claims 1 to 3, **characterized in that** a coupling piece is interposed between each transducer (14,16,18) and the unmachined workpiece (13).

5. The method as claimed in claim 4, **characterized in that** the coupling piece comprises at least one inclined plane forming an angle θ with respect to the surface of the workpiece (13) when the coupling piece (20,22,24) is interposed between the transducer (14,16,18) and the workpiece (13).

6. The method as claimed in claim 5, **characterized in that** the emission (20) and reception (22,24) coupling pieces are positioned on the surface of the workpiece (13) in such a way that their inclined planes are directed in the counterclockwise and clockwise directions with respect to the surface of the workpiece (13), respectively, the transducers (14,16,18) being positioned in such a way that their ultrasound axes are perpendicular to the inclined planes of their coupling pieces.

7. The method as claimed in one of claims 4 to 6, **characterized in that** the coupling piece is made of polymethylmethacrylate and is of substantially triangular shape.

8. The method as claimed in claim 7, **characterized in that** the angle θ ranges between approximately 30° and 32°.

9. The method as claimed in one of the preceding claims, **characterized in that** the transducers have a central frequency ranging between 1 and 15 MHz.

10. The method as claimed in one of the preceding claims, **characterized in that** the deformation of the workpiece (13) is measured using several sensors positioned on the workpiece (13).

11. The method as claimed in one of the preceding claims, **characterized in that** it is applied to a turbomachine compressor disk (26) and wherein the ultrasound velocity measurements are performed with the emitting (14) and receiving (16,18) transducers radially aligned on the surface of the disk that is to be machined.

12. The method as claimed in one of the preceding claims, **characterized in that** the number of machining operations is determined on the basis of the amount of deformation deduced from the difference in velocity calculated in step d.

## Patentansprüche

1. Verfahren zur Voraussage der Verformung eines Werkstücks, bei dem eine spanende Bearbeitung erfolgen soll, die eine Verformung des Werkstücks (13) durch Freisetzen von Restspannungen im Werkstück (13) hervorrufen kann, wobei das Process darin besteht,
a. einen Ultraschallwellenstrahl auf eine Fläche des Werkstücks zu lenken, wobei der Strahl so ausgerichtet wird, dass sich eine Längswelle (12) in einer gegebenen Richtung unter der Oberfläche des Werkstücks (13) und im wesentlichen parallel zur Oberfläche ausbreitet,
b. zumindest einen Wandler in Empfangsmodus (16, 18) auf die Oberfläche des Werkstücks anzuordnen, um die sich unter der Oberfläche ausgebreitete Längswelle (12) zu empfangen,
**dadurch gekennzeichnet, dass** es darin besteht,
c. die Geschwindigkeit bei der Ausbreitung der Längswelle (12) unter der Oberfläche zu messen,
d. wobei die Schritte a bis c in zwei verschiedenen Bereichen des Werkstücks erfolgen, wobei der erste Bereich (A) gegenüber Restspannungen empfindlich ist und der zweite Bereiche (B) gegenüber Restspannungen wenig empfindlich ist,
dann die Differenz zwischen der im ersten Bereich gemessenen Geschwindigkeit und der im zweiten Bereich gemessenen Geschwindigkeit zu berechnen und von dieser Differenz die Verformung abzuleiten, die sich bei der spanenden Bearbeitung des ersten Bereichs (A) des Werkstücks (13) ergeben wird.

2. Verfahren nach Anspruch 1, **dadurch gekennzeichnet, dass** es darin besteht, zunächst eine Kalibrierkurve für die Verformung in Abhängigkeit von der Differenz in der Geschwindigkeit der Ausbreitung der Längswelle unter der Oberfläche zu erstellen, indem bei einer Mehrzahl von ähnlichen Werkstücken die Schritte a bis d durchgeführt werden, wonach die spanende Bearbeitung erfolgt und dabei die Verformung der Werkstücke gemessen wird und diese Kalibrierkurve dazu verwendet wird, die Verformung eines nicht bearbeiteten Werkstücks (13) ausgehend von der an diesem Werkstück (13) in Schritt d berechneten Differenz in der Geschwindigkeit vorauszusagen.

3. Verfahren nach Anspruch 1 oder 2, **dadurch gekennzeichnet, dass** zwei Wandler (16, 18) im Empfangsmodus mit Ultraschallachsen verwendet werden, die parallel zueinander verlaufen und mit bekanntem Abstand voneinander getrennt liegen.

4. Verfahren nach einem der Ansprüche 1 bis 3, **dadurch gekennzeichnet, dass** ein Koppelstück zwischen jeden Wandler (14, 16, 18) und das nicht bearbeitete Werkstück (13) eingesetzt wird.

5. Verfahren nach Anspruch 4, **dadurch gekennzeichnet, dass** das Koppelstück zumindest eine geneigte Ebene aufweist, die mit der Oberfläche des Werkstücks (13) einen Winkel θ einschließt, wenn das Koppelstück (20, 22, 24) zwischen Wandler (14, 16, 18) und Werkstück (13) eingesetzt ist.

6. Verfahren nach Anspruch 5, **dadurch gekennzeichnet, dass** die Sende- (20) und Empfangskoppelstücke (22, 24) derart auf die Oberfläche des Werkstücks (13) positioniert werden, dass deren geneigte Ebenen bezüglich der Oberfläche des Werkstücks (13) in Gegenuhrzeigerrichtung bzw. in Uhrzeigerrichtung ausgerichtet sind, wobei die Wandler (14, 16, 18) so positioniert werden, dass deren Ultraschallachsen senkrecht zu den geneigten Ebenen ihrer Koppelstücke verlaufen.

7. Verfahren nach einem der Ansprüche 4 bis 6, **dadurch gekennzeichnet, dass** das Koppelstück aus Polymethylmethacrylat besteht und im wesentlichen dreiecksförmig ist.

8. Verfahren nach Anspruch 7, **dadurch gekennzeichnet, dass** der Winkel θ zwischen etwa 30° und 32° beträgt.

9. Verfahren nach einem der vorangehenden Ansprüche, **dadurch gekennzeichnet, dass** die Wandler (14, 16, 18) eine Bandmittenfrequenz von zwischen 1 und 15 MHz haben.

10. Verfahren nach einem der vorangehenden Ansprüche, **dadurch gekennzeichnet, dass** die Verformung des Werkstücks (13) mit Hilfe von mehreren Sensoren gemessen wird, die auf das Werkstück (13) positioniert werden.

11. Verfahren nach einem der vorangehenden Ansprüche, **dadurch gekennzeichnet, dass** es bei einer Verdichterscheibe (26) einer Turbo- bzw. Strömungsmaschine Anwendung findet und dass die Ultraschallmessungen der Geschwindigkeit mit den Sende- (14) und Empfangswandlern (16, 18) erfolgen, die radial an der Oberfläche der zu bearbeitenden Scheibe ausgerichtet sind.

12. Verfahren nach einem der vorangehenden Ansprüche, **dadurch gekennzeichnet, dass** die Anzahl von Bearbeitungsvorgängen ausgehend von dem Verformungsmaß bestimmt wird, das von der in Schritt d errechneten Differenz in der Geschwindigkeit abgeleitet wird.
